# EUROPEAN PATENT SPECIFICATION

(11) **EP 2 382 829 B1**
(45) Date of publication and mention of the grant of the patent: **29.10.2014**
(21) Application number: 09805711.0
(22) Date of filing: 28.12.2009
(51) Int. Cl.: H04W 92/12, H04W 56/00

(54) **METHOD OF SYNCHRONISATION WITHIN A BASE STATION SYSTEM**
VERFAHREN ZUR SYNCHRONISATION IN EINEM BASISSTATIONSSYSTEM
PROCÉDÉ DE SYNCHRONISATION À L'INTÉRIEUR D'UN SYSTÈME DE STATION DE BASE

(30) Priority: 23.01.2009 US 146826 P
(43) Date of publication of application: 02.11.2011
(73) Proprietor: Kapsch CarrierCom France S.A.S., 75001 Paris (FR)
(72) Inventor: MAURICE, François, F-94260 Fresnes (FR); SIRDEY, Renaud, F-78720 Cernay-la-Ville (FR)
(74) Representative: Weiser, Andreas
(86) International application number: PCT/EP2009/067967
(87) International publication number: WO 2010/083930

(56) References cited:
- EP-A1- 1 427 121
- WO-A1-00/42728
- WO-A1-01/50674
- US-A1- 2003 179 780
- US-A1- 2005 036 512

## Description

### FIELD OF THE INVENTION

The invention relates to a method of synchronisation of a reference frequency of a basestation transceiver (BTS) to the reference frequency of a basestation controller (BSC), wherein the basestation controller (BSC) is provided with a first interface module (IPG) comprising an oscillator and a transmitter for transmission to a second interface module (IPM) of the basestation transceiver (BTS) over an IP network.

### BACKGROUND OF THE INVENTION

A Basestation System (hereinafter BSS) typically comprises a Basestation Controller (BSC) and a plurality of Basestation Transceivers (hereinafter BTS) at different locations. Transmission between the BSC and the BTS occurs for instance through a so-called Abis interface. Such transmission is necessary in order to synchronize the frequencies of the BTS with the BSC. All BTSs shall provide an accurate frequency domain to any active mobiles; otherwise, handover of the mobiles is likely unsafe and drop call rate increases. Thereto, there is a requirement in some telecommunication standard specification, such as GSM, f.i. 3GPP Rec 45.010: "The BTS shall use a single frequency source of absolute accuracy better than 0.05 ppm for both RF frequency generation and clocking the time base. There is no phase relationship between a first and a second BTS site : this is frequency syntonization, not time synchronisation. However, for historical reasons, the word 'synchronisation' has always been used and will still be used throughout this document.

Traditional transmission between BSC and BTS in GSM/EDGE networks (Abis interface) is achieved using (TDM) circuits with in band synchronizing frequency. TDM-based E1/T1 links propagate a layer 1 reference frequency from BSC to BTS, in other words, the reference frequency is propagated in layer 1 which is also known as the physical layer. In this way, long-term frequency stability is retrieved using a frequency locked loop (FLL) or phase locked loop (PLL) locked to a tunable 16.384 MHz oscillator. GSM time is free running on each site, without any phase relationship between sites. This "drop and insert feature" for the frequency enables several BTSs to be synchronized from the BSC by the same ABIS link. A holdover mode can be temporary used at the BTS when the synchronisation source is declared absent or unsatisfying.

In a first alternate mode, a set of BTSs is divided into a "master BTS" and a couple of "slave BTSs". This is particularly useful if the BTS of the set have a location that is relatively close to one another. The time base of the 'master' BTS is locked on the ABIS link as above. The time base of the "slaves" BTSs are locked on the master's one: locking the slave local oscillator in PLL mode, recovering the reference frequency from the master, and copying the master's GSM time on the slave one.

Recently, advances are ongoing to replace the TDM network by a packet network. Herein, the transmission within the Basestation system (BSS) occurs via an IP network, e.g. internet protocols, rather than via wireless communication. These advances are known as ABIS over IP. The BSS IP feature enables packet based backhaul transmission as an alternative to today's TDM-based E1/T1 links, on the BSC to BTS Abis interface, backhaul being defined as carrying voice & data traffic between cell sites and BSC.

One disadvantageous feature of ABIS over IP is that the packet networks do not propagate any layer 1 reference frequency from BSC to BTS. Layer 2 and 3 ones, e.g. transmission with a MAC (Medium Access Control) layer or with the network layer, must be used instead. Therefore, the BTS is loosing the layer 1 syntonization provided by the TDM link. In order to solve this disadvantage, the following elements within the BSS have been introduced: The ABIS over IP features adds the following items to the legacy TDM BSS network:
A IBOS function, responsible for IP network management, authentication and security;
a IPG module within the BSC responsible for TDM to packet conversion at the BSC. It is very important to note that this IPG recovers a stratum-1 traceable clock from the BSC backplane;
a IPM module physically located at the BTS but managed by the IBOS and driven by the IPG. This module is responsible for TDM to packet conversion at the BTS. It provides a reference frequency to the legacy BTS oscillator but no phase indication for its GSM time.

However, it is not clear how to obtain synchronisation for all IPM modules within the network without substantially increasing cost. Each basestation transceiver (BTS) may be provided with means for synchronisation using GPS system. The GPS system provides a reference timing, the accuracy of which is compliant with the GSM BTS one. However, this solution is costly, uneasy to configure and manage (installation, maintenance) and is impacted by the availability of satellite coverage. Alternatively, the use of a Synchronous Ethernet may be envisaged. However, this is only available when implementing a gigabit optical transceiver in the IPM of each BTS. It is therefore considered a valid future technology, but not applicable for updating the existing network. Furthermore, application of standard Layer 2 techniques such as 1588.2 could be envisaged. However, such techniques include features that are not optimized for the GSM BSS.

Furthermore, EP 1 427 121 A1 discloses an IP-based radio access network in which clock nodes gather a number of messages from a server, including time stamps indicating their transmission and reception times. Thereafter, transmission time intervals and reception time intervals of subsequently received messages are computed. If the difference of a transmission time interval to the respective reception time interval exceeds a predetermined threshold, these intervals are both discarded. Since only the remaining transmission and reception time intervals are averaged to obtain a corresponding timing error-correction value for the clock nodes, this clock synchronisation mechanism is not very reliable.

It is therefore an object of the present invention to provide an improved method of synchronisation of at least one basestation transceiver (BTS) with a basestation controller (BSC) using an IP network, particularly ABIS over IP, for the transmission between BTS and BSC. The improved synchronisation method is particularly to meet requirements of the GSM specification.

### SUMMARY OF THE INVENTION

According to a first aspect of the invention, a method of synchronisation of a reference frequency of a second network device, particularly a basestation transceiver (BTS), to the reference frequency of a first network device, particularly a basestation controller (BSC), is provided. The method comprises the steps of:
assigning a timestamp of transmission time to a synchronisation packet to be transmitted by the first network device (BSC) to the second network device (BSC);
transmitting the packet to the second network device (BTS);
upon receipt of the packet by the second network device (BTS), assigning a timestamp of reception time, and
storing the timestamp of reception time and a timestamp of transmission time of a received synchronisation packet;
repeating said transmission of synchronisation packets, said application of timestamps within a period of observation (PoO), and said storage of timestamps at the second network device (BTS)
upon finalization of the period of observation (PoO), evaluating a network delivery on the basis of timing differences between the timestamp of reception and the corresponding timestamp of transmission,
if the network delivery rate is above a threshold, estimating a timing error and a confidence level of the received synchronisation packets,
if the confidence level is above a threshold, applying any correction to a frequency of the oscillator of the second network device (BTS) on the basis of the timing error.

The invention makes use of a dedicated timing packet flow between BSC and BTS. However, the network includes impairments, such that packet delay from BSC to BTS is not constant. Therefore, timestamping at both ends is applied. This enables the BTS to build a precise timing database. Using the timing database, the BTS decides whether the timing packet flow is to be trusted or not. Herein, a first and a second confidence stage are used.

In a first stage, it is defined as to whether the network delivery is sufficiently good. It is particularly insufficient if a plurality of synchronisation packets have not been received validly. Such valid reception is particularly reception of the packet as well as reception of its transmission time that is present in a subsequent synchronisation packet. However, substantially delayed synchronisation packets may further be classified as invalid.

In a second stage, a confidence level is defined. The aim of the second stage is to identify the local oscillator frequency variations while rejecting the packet network impairments that add a non-stationary packet delay variation. Suitably, the frequency variations are calculated on the basis of the timing difference between the timestamps of transmission and reception for a synchronisation packet. In one suitable embodiment, an estimate of the local oscillator frequency variations is made by sensing thermal variations at (eg. near) the oscillator. Then a comparison is made between the estimate and the calculated frequency variation on the basis of timing differences. If it turns out that the calculated frequency variation is far off from the estimate, the confidence level is decreased. This may lead thereto, that no update of the frequency of the local oscillator is applied.

It is an advantage of the method of the invention that the oscillator in the basestation transceiver may be a low cost oscillator. This is for instance a VCOCXO oscillator, which is thermally compensated at first order, but which displays residual frequency skew resulting from temperature variations, power supply voltage variations and age. Within the IPM, this oscillator can be considered as short term (within a few hours) stable enough to meet the overall BTS GSM requirements, but requires mid-term (thermal variations within the day) and long-term (ageing phenomenon) corrections.

It is another advantage of the method of the invention, that ageing of the oscillator in the basestation transceiver may be monitored. A validly obtained frequency correction is used to evaluate a long time average of the frequency. This can be used for signalling that ageing has gone so far so that the oscillator frequency is outside a predefined range of acceptable frequencies. It may further be used to speed up convergence during an initialisation occurring when starting up, i.e. the state typically referred to as 'power up'.

It is a further advantage of the method of the invention, that the estimation of the timing error may be carried out on the basis of a linear programming based estimation, in which offset and frequency skew are estimated. The linear programming techniques have the advantage that only limited processor time is needed. The processing time may be further reduced by using only a selected set of synchronisation packets for such calculation. Particularly, it is deemed suitable to use timestamps of one packet from a group of successive synchronisation packets, and especially the fastest one from the group.

Suitably, a timestamp of transmission is stored at the first network device for insertion into a body of a subsequent synchronisation packet, and then transmitted in the subsequent synchronisation packet. In order to provide a most adequate timestamp, this is suitably defined upon transmission. It is then unhandy, if not technically complicated, to transmit said timestamp of transmission with the synchronisation packet immediately. The storage of the transmission stamp may be arranged in any storage device as known to the skilled person, including volatile and non-volatile memory. Instead of storing in a storage device, the storage could alternatively be any form of recalculation. This is however deemed less suitable. The subsequent synchronisation packet is preferably the first subsequent synchronisation packet, but it may alternatively be any further subsequent synchronisation packet. The timestamp of transmission may be inserted into the body of more than one subsequent synchronisation packet, so as to reduce the risk that the timestamp is lost during delivery. Instead of insertion into the body of a subsequent synchronisation packet, a plurality of timestamps of transmission could be transmitted separately. This however requires storage of more data at the first network device.

The method may be carried out by assigning timestamps on synchronisation packets being transmitted from controller to transceiver, e.g. the downlink flow. In a further improvement, timestamps may be assigned to both the downlink flow and the uplink flow. This tends to improve efficiency of the evaluation processes.

The period of observation is suitably adaptive. As a result, for instance in case transmission between basestation controller and basestation transceiver is interrupted for any reason, a subsequent period of observation may be started after resuming transmission.

Suitably, the basestation controller is provided with a first interface module, and the basestation transceiver is provided with a second interface module. Such first and second interface modules, also referred to as IPG and IPM, are modules comprising all necessary components for enabling transmission and reception of data packets over an IP network. Typically, such interface module comprises the oscillator and a transceiver. Suitably, a thermal sensor is present in the second interface module for sensing thermal variations at the oscillator. Sensing data of the thermal sensor may be used in evaluating the confidence level.

The time stamp is preferably assigned at interface modules, so as to limit errors resulting from internal transmission. It is suitably carried out with local counters. These are most preferably implemented in hardware. Suitably, use is made of timestampers present in microcontroller integrated circuits.

It is observed that the present invention may further be implemented as a synchronisation mode that is additional to other synchronisation modes, such as the synchronisation modes discussed in the background of the invention.

Even though it is most suitable that the first network device is a basestation controller and the second network device is a basestation transceiver, the invention is not limited thereto. For instance, the first network device could be a basestation transceiver and the second network device another basestation transceiver. Additionally, even though the network devices are suitably used within a basestation system for use in accordance with a transmission protocol for wireless communication (such as GSM, GSM-EDGE, CDMA, W-CDMA, Wimax, LTE), the invention is not limited thereto. The network devices could for instance be applied in security applications, wherein a precise timing is to be applied to devices even though there is no simultaneous wireless communication or handover proceedings in a manner typical for wireless communication

According to a second aspect, the invention provides a basestation system comprising a first and a second network device, particularly a basestation controller and a basestation transceiver. The first and second network devices are mutually coupled through an IP network and are each provided with an oscillator having a reference frequency. The first network device comprises a timestamper for assigning a time stamp to a synchronisation packet at a transmission time, and a memory for storage of said time stamp prior to insertion into a body of a subsequent synchronisation packet. The second network device comprises a timestamper for assigning a time stamp to a synchronisation packet at a reception time. The second network device further comprises a memory for storage of said time stamps of the transmission time and of the reception time for a plurality of synchronisation packets within a period of observation (PoO). The second network device additionally comprises a processor adapted to:
evaluating a network delivery on the basis of timing differences between the timestamp of reception and the corresponding timestamp of transmission,
if the network delivery is deemed acceptable, estimating a timing error and a confidence level of the received synchronisation packets, and
if the confidence level is above a threshold, applying any correction to the reference frequency of the oscillator of the second network device (IPM) on the basis of the timing error.

According to a third aspect of the invention, a basestation transceiver is provided, which basestation transceiver is suitable for coupling to a basestation controller through an IP network. The basestation transceiver comprises:
an oscillator provided with a reference frequency;
a transceiver for transmission and reception of packets from and to the basestation controller through the IP network;
a timestamper for assigning a time stamp of reception time to a synchronisation packet received from the basestation controller through the IP network;
a memory for storage of said time stamps of reception and time stamps of transmission received from the basestation controller in bodies of a plurality of synchronisation packets received within a period of observation (PoO), and
a processor adapted to evaluate a network delivery at the end of a period of observation (PoO) on the basis of timing differences between the timestamp of reception and the corresponding timestamp of transmission; if the network delivery is deemed acceptable, to estimate a timing error and a confidence level of the received synchronisation packets, and if the confidence level is above a threshold, to apply any correction to the reference frequency of the oscillator on the basis of the timing error. It is observed for clarity that dependent claims and features discussed in relation to the first aspect of the invention may further be applied to the second and third aspects of the invention.

### BRIEF DESCRIPTION OF THE FIGURES

Fig. 1 shows a flow diagram of several steps in the evaluation steps of one embodiment in accordance with the method of the invention;
Fig. 2 shows a graph reflecting the timing at the first and the second interface modules, and timing difference and information flow between those;
Fig. 3 to 8 show graphs in which the timing of the second interface module (tIPM) is set out against the timing of the first interface module (tIPG), and wherein each graphs shows a result of another variation

### DETAILED DESCRIPTION OF PREFERRED EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

It is observed for clarity that the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

The present invention is related to synchronisation of the frequencies of a base station controller (BSC) and a base station transceiver (BTS). Instead of synchronisation from the base station controller directly, use could be made of a unit linked to the base station controller, i.e. to the so-called BSC stratum I traceable clock. Such unit could even be a first basestation transceiver. Any such unit linked to the base station controller and provided with the same reference frequency as the base station controller is deemed to be part of the base station controller. If such unit is remotely located from the base station controller, it preferably comprises a wireless connection or a direct wired connection to the base station controller, particularly any connection with which a reference frequency can be transmitted on layer 1, such as a TDM-link. Effectively, the synchronisation will be carried between a first interface module (IPG) which carries a reference frequency linked to the reference frequency of the base station controller, and a second interface module (IPM) in the base station transceiver. The first and second interface modules will further be referred to as IPG and IPM hereinafter. While the following description focuses particularly on the downlink, e.g. from IPG to IPM, additional timestamp data may be collected in the uplink, from IPM to IPG. In the latter case, such additional timestamp data are suitably transmitted to the IPM, so that the IPM may carry out its frequency correction. While the description uses IPG as the standard transmitter, it will be clear to the skilled person that in the event of additionally using the downlink, the IPM will be transmitter and the IPG receiver.

Suitably, the IPM hosts a local VCOCXO oscillator, which is thermally compensated at first order, but which displays residual frequency skew resulting from temperature variations, power supply voltage variations and age. Within the IPM, this oscillator can be considered as short term (within a few hours) stable enough to meet the overall BTS GSM requirements, but requires mid-term (thermal variations within the day) and long-term (ageing phenomenon) corrections.

In order to evaluate the frequency variation of the local oscillator in the IPM, it is assumed that the BSC clock reference is perfect and equal to 1. An IPM local clock frequency at a certain time is then a = 1 + α, α is herein being the local frequency error also called "skew". The ultimate goal of the frequency recovery algorithm is to estimate α and apply a series of corrections to permanently reduce α well within the 50 ppb specification as required by the GSM standard. However, it is not excluded that variations may be applied that are within the scope of the claims which do not reach the 50 ppb specification of the GSM standard.

In accordance with the invention, a dedicated packet flow is used between the first network device (IPG) and the second device (IPM) to provide the IPM a reference frequency source. The packet flow is typically sent over an IP network. Typically, a plurality of second network devices is coupled to a first network device. It is not excluded that one such second network device again acts as a first network device for a further group of network devices.

Preferably, packets are transmitted periodically to ease the construction of packet tables at the IPM side. This periodic transmission allows that the number of time stamps of transmission is actually reduced, particularly if the periodicity is maintained very strict. Instead of transmission of all time stamps, one or a limited number may be transmitted, preferably together with an indicator of the period of the periodic transmission. The second network device may on the basis thereof evaluate the timestamps of transmission time independently for synchronisation packets of which it knows the sequence number. However, transmitting each or at least most of the timestamps of transmission is preferable, as it leaves freedom to the first network device to vary transmission time of the synchronisation packets in order to optimize other transmissions.

More preferably, packets have a constant size to reject certain network packet delay variation characteristics (mostly store & forward mechanism on slow speed trunks). While the present application specifically refers to synchronisation packets, the packets may include other data than only synchronisation, more particularly some further control data. However, it may well be more adequate to transmit the synchronisation packets separately.

Furthermore, it is suitable to transmit the synchronisation packets as IP secured packets, so as to avoid attacks. Thereto, a security mechanism may be used that has been put in place between IPG and IPM for GSM payload and signalling flows. It is known as IPSEC. Moreover, a sequence number may be included to increase robustness against packet loss or delays.

In order to define frequency skew in the IPM, it has been deemed necessary to provide timestamps: for each synchronisation packet between IPG and IPM a transmission time and a reception time is locally assigned. For avoidance of unnecessary computations, the clock used for time stamping at the IPM side preferably has the same nominal frequency as the clock used for time stamping at the IPG side. However, it will be understood that another frequency may be chosen. The common frequency is preferably high enough to limit the measurement noise created by rounding effect of the time stamping period. 65.356 MHz is chosen in the ABIS over IP product, which represents a measurement noise of one 15ns period. This period is very small compared to the other disturbing effects of the packet network. Generally, a suitable range of frequencies appears between 1 and 500 MHz, more preferably between 10 and 100 MHz.

In one implementation, a local time counter shall increment every clock cycle. The current value of this time counter is used to assign a timestamp to each transmit or receive packet. The time counter may be a 64 bits counter. In that case, the time counter overflows every 8925 years if clocked at 65.356 MHz. Such time counters are commercially available within microcontroller integrated circuits. Suitably, dedicated timestamps are used and located in the MAC interface of the IPG and IPM boards. This reduces risk that transmission within the BSC, BTS, the IPG or the IPM, leads to additional errors.

It is observed for sake of completeness that no phase relationship between the IPG and various IPM time counters is needed. This means that each IPM aims at locking its local frequency to the IPG one, but does not aim at having the very same counter value as the IPG one.

It is furthermore observed that for every synchronizing packet, the timestamp value of emitting time is only available to a processor within the first interface module after transmission of the synchronisation packet. This value is then stored and inserted in the body of the subsequent synchronizing packet.

### Four stage algorithm

A processor in the IPM or the basestation transceiver (BTS) responsible for carrying out the synchronisation, is hereinafter referred to as the Synchronisation Sequencer. Where in the following reference is made to the IPM for storage and/or processing, it is to be understood that this is merely one embodiment and that such functions could also be carried out elsewhere. However, it appears most suitable to do this in the IPM, as the synchronisation process is an activity distinct from other activities of the BTS and data transmission from BSC to BTS. When the IPM runs in "synchronisation over IP" mode, the Synchronisation Sequencer includes in one advantageous embodiment of the invention, following stages of processing

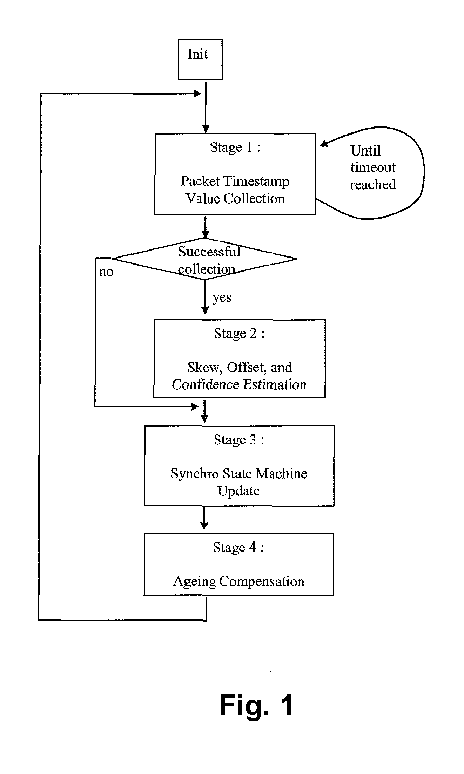

Fig. 1 is a flow diagram illustrating the flow

Prior to an effective stage, initialisation is carried out. This initialisation for instance occurs at a restart of the IPM and at detection of an IPG swap. In order to leave this initialization stage, activation of the synchronisation packet flow from the IPG is to be detected.

A first stage can be classified as 'packet timestamp value collection'. It is performed at the IPM using some feedback from the IPG. Herein, a table of Downlink synchronizing packets over a given Period of Observation (PoO) is built in the IPM. Suitably, the PoO lasts a few minutes, for instance from 21 to 344 seconds. In one embodiment, it ends with expiration of a local timer, regardless of the actual packet number collected. The table includes various parameters for each synchronisation packet. These parameters include first of all the timestamp values of transmission and reception. Preferably, it also includes a sequence number. Additionally, validity is preferably included. The validity of a synchronisation packet may be updated during a Period of Observation and/or at the end of a Period of Observation. Typically, an entry of a synchronisation packet is deemed valid if transmit and receive timestamp values are available and are not very much delayed. For instance, in one suitable embodiment, an entry of a synchronisation packet is classified as invalid if it is received after reception of a synchronisation packet with a higher sequence number. At the end of this stage, the IPM Synchronisation Sequencer decides on network delivery. The network delivery is typically acceptable, if the timestamp value collection is successful. It is unsuccessful, if the number of invalid packets is too high.

A second stage involves estimation of timing error and confidence level. The timing error is suitably defined by estimating a frequency skew of the local clock and a time base offset between the IPM and the IPG. If the first stage was unsuccessful, the confidence rate is forced null. Then, the second stage is not carried out at all.

In a third stage, called 'synchro state machine update', updates are provided. In a preferred embodiment, it is performed only if also the second stage is performed. Herein, updates of the counters and the Synchronisation Sequencer are applied. An appropriate frequency correction may be applied to the oscillator in the IPM based on the result of the above estimation process. These results may include a low confidence level, e.g. a confidence level below a threshold. In that case, no frequency correction will be applied. An alarm may be generated if certain parameters are out of a predefined range.

In a fourth stage, ageing compensation is looked at. In a preferred embodiment, this step is performed only if the third stage at the IPM has been performed. This stage comprises
computing a long term frequency average, to be taken into account when the ageing memory is to be updated as described just below. This is performed by entering each valid frequency correction, for instance in an IIR low pass filter, and
periodically (typically every two days) updating an ageing value, hereinafter also referred to as DAC value, in a non-volatile memory. This memory content may be used to speed up convergence mechanisms used upon initialisation.

Then the first stage is started again: a new PoO is launched.

It is observed for clarity that variations to the above sequence of steps may be applied. For instance, the second step may be limited to calculation of a confidence level, while the third step also includes the estimation of the timing error.

Furthermore, the fourth step could be carried out at a lower frequency than the other steps

In one implementation, the downlink synchronisation packet flow is embodied in the following manner: as soon as IPG has established connection to an IPM, it shall generate the downlink synchronisation packet flow. This implies that it begins transmission of synchronisation packets, suitably periodically. A suitable period is in the order of 5 to 500 ms, preferably 10 to 50 ms, for instance every 21 ms. A jitter in the period is allowed, the jitter may be in the order of some microseconds, if the period is in the order of 10 to 50 ms. The IPG repetitively prepares the downlink synchronisation packet including inside its body the transmission timestamp of the preceding synchronisation packet. It will provide an instruction to the time stamper to specify a time stamp. Thereafter, it will be sent and it will collect the timestamp from the timestamper.

Upon receipt of a synchronisation packet, the IPM shall detect the packet and collect its reception timestamp value. While within a Period of Observation, the IPM shall:
- at the beginning of the PoO, identify the first packets to initiate an offset removal process
- check the validity of the packet. Herein, it may use size, sequence number and checksums as parameters
It is observed that if any synchronisation packet is lost in the IP network, two timestamp values will be missing. So, then both the lost synchronisation packet and the one preceding the lost one (for which no transmission time stamp is obtained) will be declared as missing.

In one implementation, a time out occurs on the IPM side, when the PoO is over, regardless of the actual number of downlink packets received. Suitably, the number of expected synchronisation packets per Period of Observation is in the range of 1024 to 16384. As a result, with a default period of 21 ms, the duration of the Period of Observation is in the range of 21 to 344 seconds.

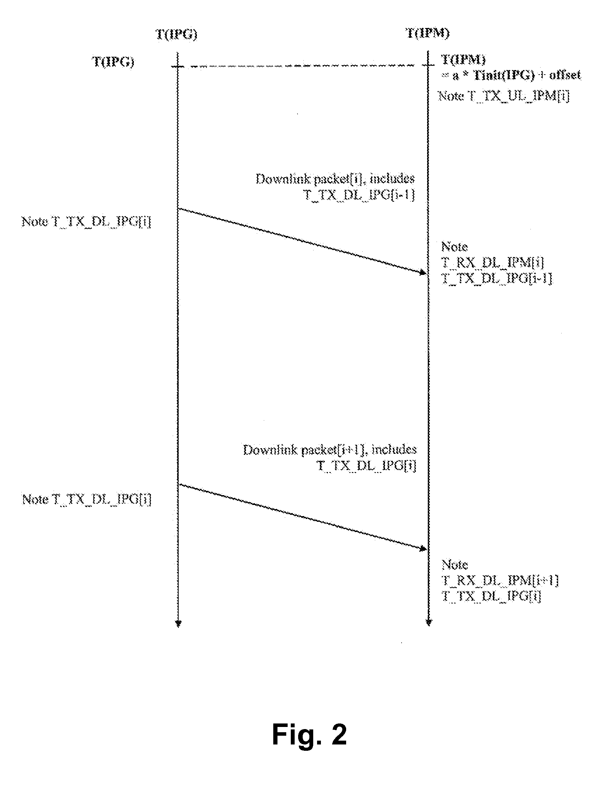

Fig. 2 shows a graph in which the time of the IPG is compared to the time of the IPM. Both the IPM time and the IPG time are indicated on a vertical axis. As is specified, the IPM time T(IPM) can be defined as a * T (IPG) + offset. The first arrow indicates the transmission of a first synchronisation packet T_TX_DL_IPG (i) from the IPG to the IPM. This synchronisation packet includes in its body the time stamp of the preceding packet, i.e. T_TX_DL_IPG (i-1). Upon receipt by the IPM, the IPM has thus the information of the timestamp of transmission T_TX_DL_IPG (i-1), and the timestamp of reception T_RX_DL_IPM (i). The second arrow indicates the transmission of a subsequent synchronisation packet. This brings to the IPM the information of the timestamp of transmission T_TX_DL_IPG (i), and the timestamp of reception T_RX_DL_IPM (i+1). After all, the IPM therewith obtains timestamps, T_TX_DL_IPG (i-1), T_TX_DL_IPG (i), T_RX_DL_IPM (i), and T_RX_DL_IPM (i+1).

The IPM then is in charge of computing how much synchronisation packets actually have been received from the IPG. In the embodiment of periodic transmission, the IPM may derive from the duration of the Period of Observation, how many synchronisation packets can be expected. If the network has a too high packet drop rate, then the amount of synchronizing packets will be too low to provide accurate estimations. Thereto, network delivery is computed at the end of the Period of Observation (PoO). Several implementations may be used thereto. One may simply compare the number of actually received packets with the expected number of packets. One may alternatively count the number of received packets that additionally have been classified as valid.

If the value of successfully received synchronisation packets is below an acceptable threshold, then the network is considered unsafe and the clock correction algorithm is aborted. Thereto, the confidence level is forced null in the second stage. In the third stage, neither is a frequency correction applied, nor is a State update carried out. If available, a counter reflecting network impairment may be updated. In the fourth stage, the ageing value is not updated.

In order to reduce the amount of memory size and computation efforts significantly, only a selected set of synchronisation packets may be taken into account. In one implementation, the fastest packet in a group of successive synchronisation packets is used. The group typically comprises between 4 and 100 packets, more preferably between 8 and 64, more preferably in the order of 16 to 32. The successive synchronisation packets are suitably identified by their sequence number, regardless of if they are received or missing. The evaluation of which is fastest is made by comparison of the time difference between reception time and transmission time for each packet. It will be clear that variations are envisageable. For instance, one may define relatively small groups, and thereafter apply a further selection. Such procedure allows to use more data of periods in which there apparently has been an adequate, e.g. fast, transmission. After this offset removal, IPG and IPM time stamp values are suitably scaled within the IPM in such a way that they are increasing values starting from approximately zero.

As a result hereof, the IPM builds a Downlink table at the end of the Period of Observation, or even prior to this. In this embodiment, the Downlink table has a number of entries in the range from 64 to 1024. For each entry a selected fastest packet sequence number is mentioned, as well as the transmit and receive time stamps of the selected packet.

In order to prepare the confidence level estimation, a thermal sensor is implemented close to the IPM oscillator. This thermal sensor provides an estimation of the oscillator external temperature with a resolution of for instance 0.25 °C. This temperature is suitably monitored periodically during the PoO and the maximum amplitude within the PoO shall be recorded. As the thermal variation is a major contributor to the IPM oscillator variations, this measurement is used to correlate with other clock skew measurements.

Only if the Period of Observation is completed and regarded as successful, the second stage is launched. Parameters of the success are the network delivery, and suitably, the observation that neither IPM nor IPG activity swap are detected during the Period of Observation.

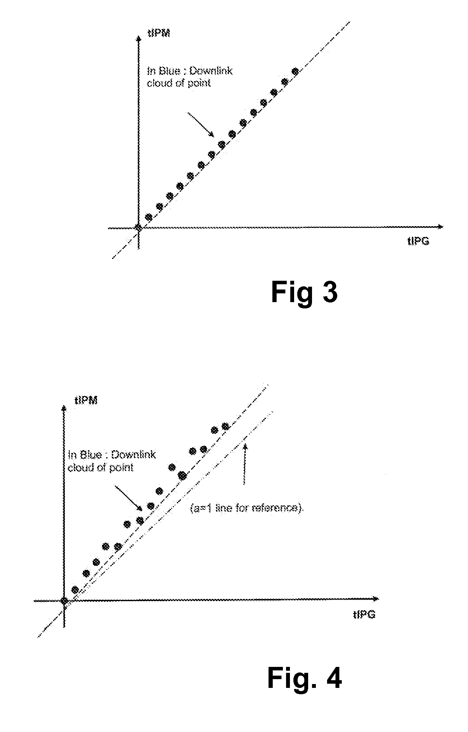

The challenge of this second stage will be explained with reference to several graphs as shown in Fig. 3-8. In each graph, the time of the IPM is set out against the time of the IPG.

Fig. 3 shows a perfect configuration. Such a perfect case can be considered with the following characteristics: first, the IPM local clock frequency is equal to the IPG's one throughout the PoO (a = 1, α = 0); secondly, the propagation delay of the IP network is constant for every packet and no packets are lost. As a result hereof, all packets are on a straight line (with equation y = ax + b), where a=1 and b=0. The cloud of packets represents a straight line.

Fig. 4-8 show real life configurations. Such configuration can be considered with following characteristics: first, the IPM local clock frequency is different from the IPG's one throughout the PoO (a = 1 + α, with α <> 0), and the PoO is not short enough so that this error is considered as perfectly constant throughout the PoO. Additionally, the latency of the IP network is not constant for every packet and some packets are lost. The following network impairments may occur: switches and routers add variable queuing and serialisation delay; traffic congestion adds packet delay variation; traffic routes through the network have a constant 'ideal' minimum propagation delay, but routes may change and add more or less propagation delay (it is assumed that this are rare events in carrier-grade networks); various physical layer mediums (copper, fiber, air) may add variable delay.

Fig. 4 shows a packet timing diagram for this non perfect realistic case. The challenge of the estimation algorithm is to identify the optimized straight line y = ax + b. The line is chosen as the line being closest under the cloud of points. *a* is the estimation of the IPM clock frequency skew, b is the sum of an offset and the minimal downlink propagation time. Actually, b is slightly negative, and zero only, if the very first packet is in contact with the downlink straight line. *a* represents the IPM to IPG clock ratio estimation. The frequency skew α is a -1.

The way to avoid applying erroneous corrections in the most challenging circumstances is to compute a confident rate on the passed PoO data: this value is suitably rated from maximum (100%) to minimum (0%). After computation of the straight line estimations, the distance between the straight line and the cloud of fastest selected packets is measured throughout the PoO to compute the confidence level c. This confidence level c is taken into account by the third stage of the algorithm, to compute and apply a local IPM frequency correction.

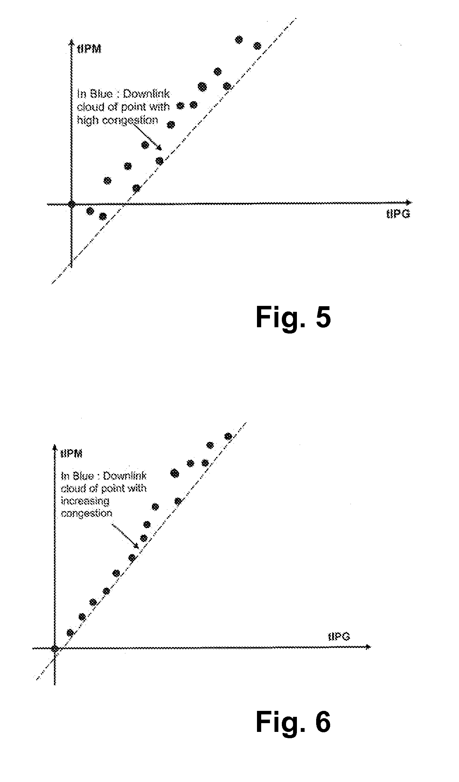

In order to evaluate the confidence level, several worst case configurations are shown in Figures 5-8. Worst case configurations can be expected, that seriously challenge the performance of the frequency algorithm.

Fig. 5 shows the results following from a network with a high congestion rate. Then very few packets are close to their minimum propagation delay.

Fig. 6 shows the results following a network having a slow traffic ramp. Herein, the expected curves are impacted by at least two phenomena. If GSM traffic load is fluctuating, then the compression rate will evolve and the associated packet size accordingly. However, synchronizing packaets are within a separate packet flow with fixed size packets, so the impact will be negligible. If general network traffic is modulated, then the congestion rate and minimal packet delay could be significantly different from the beginning of the PoO to the end of the it, particularly if the flow of synchronisation packets is not assigned maximum priority.

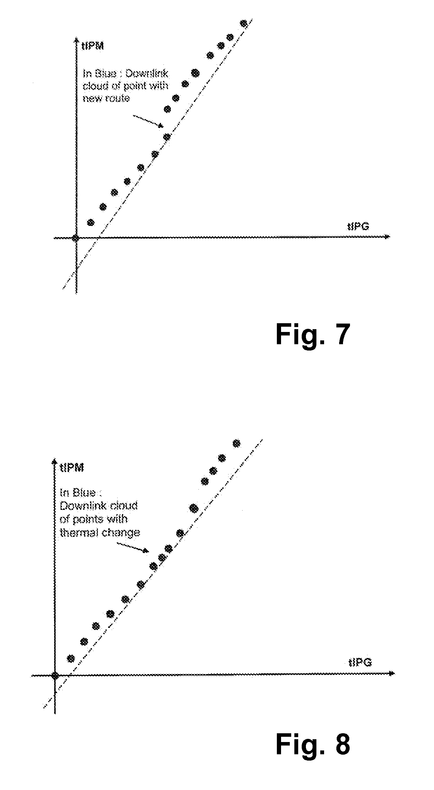

Fig. 7 shows the results following a network rout change occurring with the PoO. In this case, the curves are totally different and represent some discontinuities. Route changes are characterized by missing packets during the route change and new minimum value of the packet delay propagation on the new route.

Fig. 8 shows the result of a fast thermal evolution at the IPM side with frequency impact on the local oscillator frequency. As a result, the curves are slightly different and represent some non-linearity.

Facing the above worst configuration scenarios, the expected behaviour of the clock recovery algorithm is:
1. Detect thermal variations close to the IPM oscillator with a dedicated thermal sensor
2. compute straight line to fit as best as possible to the fastest packets.
3. as a result to the network impairment and/or IPM clock thermal variations, the straight line will not perfectly fit the cloud of packets
4. In this case, the confidence level shall be degraded
5. the IPM clock frequency correction shall be limited or null, as confidence is higher in the IPM local clock characteristics than in the network one.

In summary, the invention relates to a method of synchronisation of a reference frequency of a second network device, particularly basestation transceiver (BTS), to the reference frequency of a first network device, particularly a basestation controller (BSC) comprises a sequence of steps, wherein synchronisation packets are transmitted and provided with a timestamp of transmission and a timestamp of reception. An evaluation network delivery is evaluated upon finalization of a period of observation. If high enough, a confidence level is established of the received synchronisation packets. Only if the confidence level is above a threshold, a correction to the reference frequency of the oscillator in the basestation transceiver is applied. The invention further relates to a basestation system with a basestation transceiver and a basestation controller that are mutually coupled over an IP network, and each provided with an oscillator having a reference frequency. The invention further relates to a basestation transceiver within such a system

## Claims

1. A method of synchronisation of a reference frequency of an oscillator of a second network device (BTS, IPM) to the reference frequency of an oscillator of a first network device (BSC, IPG), which method comprises the steps of:
assigning a timestamp of transmission time to a synchronisation packet to be transmitted by the first network device (BSC, IPG) to the second network device (BTS, IPM),
transmitting the packet to the second network device (BTS, IPM);
upon receipt of the packet by the second network device (BTS, IPM), assigning a timestamp of reception time,
storing the timestamp of reception time and a received timestamp of transmission time at the second network device (BTS, IPM);
repeating said transmission of synchronisation packets, said application of timestamps of reception time within a period of observation (PoO), and said storage of timestamps at the second network device (BTS, IPM);**characterized by** the steps of:
upon finalization of the period of observation (PoO), evaluating a network delivery on the basis of timing differences between the timestamp of reception and the corresponding timestamp of transmission,
estimating a timing error and a confidence level of the received synchronisation packets when the network delivery is deemed acceptable,
applying any correction to a frequency of the oscillator of the second network device (BTS, IPM) on the basis of the timing error when the confidence level is above a threshold.

2. The method as claimed in Claim 1, wherein the first network device (BSC, IPG) is a basestation controller (BSC) and the second network device (BTS, IPM) is a basestation transceiver (BTS).

3. The method as claimed in Claim 2, wherein the basestation controller (BSC) and the basestation transceiver (BTS) are provided with a first and a second interface module (IPG, IPM) respectively for enabling transmission and reception over the IP network, each of which interface modules is provided with a time counter, a current value of the time counter being used for assigning the timestamps.

4. The method as claimed in Claim 1, 2 or 3, wherein the oscillators of the first and the second network device (BSC, IPG, BTS, IPM) have a nominal frequency that is equal.

5. The method as claimed in Claim 3, wherein the nominal frequency is high enough to limit measurement noise created by a rounding effect of a timestamping period.

6. The method as claimed in any of the previous Claims, wherein the synchronisation packets are transmitted periodically.

7. The method as claimed in any of the previous Claims, wherein the timestamp of transmission is stored in the first network device (BSC, IPG) for insertion into a body of a subsequent synchronisation packet and then transmitted with the subsequent synchronisation packet.

8. The method as claimed in any of the previous Claims, wherein a sequence number is present in the body of a synchronisation packet, which is also stored in the second network device (BTS, IPM) and used in the estimation of the delivery time and/or the confidence level.

9. The method as claimed in Claim 1 or 8, wherein the network delivery evaluation comprises the steps of:
evaluating a delivery time as the timing difference between the timestamp of reception and a corresponding timestamp of transmission;
qualifying a synchronisation packet as invalid, if the delivery time is above a threshold or may not be determined due to a missing timestamp,
determining how many synchronisation packets are invalid;

10. The method as claimed in Claim 9, wherein a transmission of a synchronisation packet is deemed valid if it is received in accordance with its sequence number.

11. The method as claimed in Claim 1, wherein the specification of the confidence level comprises the steps of:
detecting thermal variations close to the oscillator in the second network device (BTS, IPM) with a thermal sensor;
determining a deviation of the frequency on the basis of said thermal variations;
comparing timestamps of at least some of the synchronisation packets with said deviation of the frequency;
if the timestamps do not match the frequency deviation, lower the confidence level.

12. The method as claimed in Claim 1, wherein the timing error is provided by estimating a time base offset between the first network device (BSC, IPG) and the second network device (BSC, IPM), and a local clock frequency skew.

13. The method as claimed in Claim 11 or 12, wherein evaluation of the timestamps is carried out only for a selected number of synchronisation packets, a selection of synchronisation packets being made by choosing a synchronisation packet from a group of successive synchronisation packets.

14. The method as claimed in Claim 13, wherein the synchronisation packet is chosen which is fastest within the group.

15. The method as claimed in any of the previous Claims, further comprising an ageing compensation sequence comprising:
computing a long term frequency average by entering each valid frequency correction into a low pass filter, and
periodically updating an ageing value in a non-volatile memory
if the ageing value approaches an extreme value of a predefined range, an alarm message is sent out.

16. The method as claimed in any of the previous Claims, wherein the synchronisation packets have a constant size.

17. The method as claimed in Claim 3, wherein the assignment of timestamps is carried out by hardware timestamps present in a MAC interface within the first and second interface modules (IPG, IPM).

18. The method as claimed in any of the previous Claims, wherein a further timestamping process is applied by transmission of synchronisation packets from the second network device (BTS, IPG) to the first network device (BSC, IPM), results of the further timestamping process being used upon estimating the confidence level and the timing error.

19. The method as claimed in any of the previous Claims, wherein the synchronisation packets are transmitted through an IP security protocol (IPSEC).

20. The method as claimed in any of the previous Claims, wherein the second network device (BTS, IPG) acts as a master clock to at least one further network device, preferably a basestation transceiver (BTS), a clock of said further network device being updated by replacement by the master clock.

21. A basestation system comprising a first and a second network device (BSC, IPG, BTS, IPM) that are mutually coupled through an IP network, which first and second network device (BSC, IPG, BTS, IPM) are each provided with an oscillator having a reference frequency,
wherein the first network device (BSC, IPG) comprises a timestamper for assigning a time stamp to a synchronisation packet at a transmission time, and a memory for storage of said time stamp prior to insertion into a body of a subsequent synchronisation packet,
wherein the second network device (BTS, IPM) comprises a timestamper for assigning a time stamp to a synchronisation packet at a reception time, and further comprises a memory for storage of said time stamps of the transmission time and of the reception time for a plurality of synchronisation packets within a period of observation (PoO),
**characterized in that** the second network device (BTS, IPM) further comprises a processor adapted to: evaluate a network delivery at the end of a period of observation (PoO) on the basis of timing differences between the timestamp of reception and the corresponding timestamp of transmission,
estimate a timing error and a confidence level of the received synchronisation packets when the network delivery is deemed acceptable, and
apply any correction to the reference frequency of the oscillator of the second network device (BTS, IPM) on the basis of the timing error when the confidence level is above a threshold.

22. The basestation system as claimed in Claim 21, wherein the first network device (BSC, IPG) is a basestation controller (BSC) and the second network device (BTS, IPM) is a basestation transceiver (BTS), each of which basestation controller (BSC) and basestation transceiver (BTS) are provided with an interface module (IPG, IPM) comprising said timestamper.

23. A basestation transceiver (BTS) coupled to and/or designed for coupling to a basestation controller (BSC) through an IP network, and comprising:
- an oscillator provided with a reference frequency;
- a transceiver for transmission and reception of packets from and to the basestation controller (BSC) through the IP network;
- a timestamper for assigning a time stamp of reception time to a synchronisation packet received from the basestation controller (BSC) through the IP network;
- a memory for storage of said time stamps of reception and time stamps of transmission received from the basestation controller (BSC) in bodies of a plurality of synchronisation packets received within a period of observation (PoO);**characterized by**
- a processor adapted to evaluate a network delivery at the end of a period of observation (PoO) on the basis of timing differences between the timestamp of reception and the corresponding timestamp of transmission; to estimate a timing error and a confidence level of the received synchronisation packets when the network delivery is deemed acceptable; and to apply any correction to the reference frequency of the oscillator on the basis of the timing error when the confidence level is above a threshold.

24. The basestation transceiver as claimed in Claim 23, further comprising a thermal sensor located close to the oscillator for sensing temperature variations at the oscillator, sensing data of the thermal sensor being used by the processor for evaluating the confidence level.

25. The basestation transceiver as claimed in Claim 23, wherein said timestamper is further arranged to assign a time stamp of transmission time to a reverse synchronisation packet to be sent to the basestation controller (BSC), time stamp values relating to reverse synchronisation packets being stored in the memory and used for the evaluation of the network delivery, the timing error and/ or the confidence level.

## Patentansprüche

1. Verfahren zum Synchronisieren einer Referenzfrequenz eines Oszillators eines zweiten Netzwerkgeräts (BTS, IPM) auf die Referenzfrequenz eines Oszillators eines ersten Netzwerkgeräts (BSC, IPG), wobei das Verfahren die folgenden Schritte umfasst:
Zuweisen eines Zeitstempels der Sendezeit zu einem Synchronisierungspaket, das von dem ersten Netzwerkgerät (BSC, IPG) an das zweite Netzwerkgerät (BTS, IPM) gesendet werden soll,
Senden des Pakets an das zweite Netzwerkgerät (BTS, IPM);
Zuweisen eines Zeitstempels der Empfangszeit beim Empfang des Pakets durch das zweite Netzwerkgerät (BTS, IPM),
Speichern des Empfangszeitstempels und eines empfangenen Sendezeitstempels durch das zweite Netzwerkgerät (BTS, IPM);
Wiederholen des genannten Sendens von Synchronisierungspaketen, des genannten Zuweisens von Empfangszeitstempeln innerhalb eines Beobachtungsintervalls (PoO) und des genannten Speicherns von Zeitstempeln durch das zweite Netzwerkgerät (BTS, IMP); **gekennzeichnet durch** die Schritte:
am Ende des Beobachtungsintervalls (PoO), Auswerten einer Netzwerklieferung auf Basis von Zeitdifferenzen zwischen dem Empfangszeitstempel und dem zugehörigen Sendezeitstempel,
Schätzen eines Zeitfehlers und eines Vertrauenspegels der empfangenen Synchronisierungspakete, wenn die Netzwerklieferung als akzeptabel erachtet wird,
Anwenden einer Korrektur auf eine Frequenz des Oszillators des zweiten Netzwerkgeräts (BTS, IPM) auf Basis des Zeitfehlers, wenn der Vertrauenspegel über einem Schwellwert liegt.

2. Verfahren nach Anspruch 1, wobei das erste Netzwerkgerät (BSC, IPG) eine Basisstations-Steuereinrichtung (BSC) und das zweite Netzwerkgerät (BTS, IPM) ein Basisstations-Sendeempfänger (BTS) ist.

3. Verfahren nach Anspruch 2, wobei die Basisstations-Steuereinrichtung (BSC) und der Basisstations-Sendeempfänger (BTS) mit einem ersten bzw. einem zweiten Schnittstellenmodul (IPG, IPM) zum Ermöglichen eines Sendens und Empfangens über das IP-Netzwerk ausgestattet sind, wobei jedes der Schnittstellenmodule mit einem Zeitzähler ausgestattet ist und ein momentaner Wert des Zeitzählers zur Zuweisung der Zeitstempel verwendet wird.

4. Verfahren nach Anspruch 1, 2 oder 3, wobei die Oszillatoren des ersten und des zweiten Netzwerkgeräts (BSC, IPG, BTS, IPM) gleiche Nennfrequenz haben.

5. Verfahren nach Anspruch 3, wobei die Nennfrequenz groß genug ist, um Messrauschen zu beschränken, das durch einen Rundungseffekt einer Zeitstempelperiode entsteht.

6. Verfahren nach einem der vorhergehenden Ansprüche, wobei die Synchronisierungspakete periodisch gesendet werden.

7. Verfahren nach einem der vorhergehenden Ansprüche, wobei der Sendezeitstempel im ersten Netzwerkgerät (BSC, IPG) zur Einfügung in einen Hauptabschnitt eines nachfolgenden Synchronisierungspakets gespeichert und dann mit dem nachfolgenden Synchronisierungspaket gesendet wird.

8. Verfahren nach einem der vorhergehenden Ansprüche, wobei eine Sequenznummer im Hauptabschnitt eines Synchronisierungspakets vorhanden ist, die auch im zweiten Netzwerkgerät (BTS, IPM) gespeichert wird und bei der Schätzung der Lieferungszeit und/oder des Vertrauenspegels verwendet wird.

9. Verfahren nach Anspruch 1 oder 8, wobei die Auswertung der Netzwerklieferung die folgenden Schritte umfasst:
Auswerten einer Lieferungszeit als Zeitdifferenz zwischen dem Empfangszeitstempel und einem zugehörigen Sendezeitstempel;
Einstufen eines Synchronisierungspakets als ungültig, wenn die Lieferungszeit über einem Schwellwert liegt oder wegen eines fehlenden Zeitstempels nicht bestimmt wurde;
Bestimmen, wie viele Synchronisierungspakete ungültig sind.

10. Verfahren nach Anspruch 9, wobei ein Senden eines Synchronisierungspakets als gültig eingestuft wird, wenn es in Übereinstimmung mit seiner Sequenznummer empfangen wird.

11. Verfahren nach Anspruch 1, wobei das Spezifizieren des Vertrauenspegels folgende Schritte umfasst:
Detektieren von thermischen Änderungen in der Nähe des Oszillators im zweiten Netzwerkgerät (BTS, IPM) mittels eines thermischen Sensors;
Bestimmen einer Abweichung der Frequenz auf Basis der genannten thermischen Änderungen;
Vergleichen von Zeitstempeln von zumindest einigen der Synchronisierungspakete mit der genannten Abweichung der Frequenz;
Herunterstufen des Vertrauenspegels, wenn die Zeitstempel nicht mit der Frequenzabweichung übereinstimen.

12. Verfahren nach Anspruch 1, wobei der Zeitfehler durch Schätzen eines Zeitbasis-Offsets zwischen dem ersten Netzwerkgerät (BSC, IPG) und dem zweiten Netzwerkgerät (BSC, IPM) und eines lokalen Taktfrequenzversatzes bereitgestellt wird.

13. Verfahren nach Anspruch 11 oder 12, wobei das Auswerten der Zeitstempel nur für eine ausgewählte Anzahl von Synchronisierungspaketen durchgeführt wird, und wobei eine Auswahl von Synchronisierungspaketen durch Wählen eines Synchronisierungspakets aus einer Gruppe von aufeinanderfolgenden Synchronisierungspaketen durchgeführt wird.

14. Verfahren nach Anspruch 13, wobei das Synchronisierungspaket gewählt wird, welches das schnellste der Gruppe ist.

15. Verfahren nach einem der vorhergehenden Ansprüche, weiters umfassend eine Alterungskompensationssequenz umfassend:
Berechnen eines Langzeit-Frequenzmittels durch Einspeisen jeder gültigen Frequenzkorrektur in ein Tiefpassfilter, und
periodisches Aktualisieren eines Alterungswerts in einem nicht-flüchtigen Speicher,
Aussenden einer Alarmnachricht, wenn sich der Alterungswert einem Extremwert eines vorbestimmten Bereichs annähert.

16. Verfahren nach einem der vorhergehenden Ansprüche, wobei die Synchronisierungspakete eine konstante Größe haben.

17. Verfahren nach Anspruch 3, wobei das Zuweisen der Zeitstempel durch Hardware-Zeitstempel durchgeführt wird, die in einer MAC-Schnittstelle in den ersten und zweiten Schnittstellenmodulen (IPG, IPM) vorhanden sind.

18. Verfahren nach einem der vorhergehenden Ansprüche, wobei ein weiterer Zeitstempel-Vorgang durch Senden von Synchronisierungspaketen vom zweiten Netzwerkgerät (BTS, IPG) an das erste Netzwerkgerät (BSC, IPM) durchgeführt wird, wobei Ergebnisse des weiteren Zeitstempel-Vorgangs zum Schätzen des Vertrauenspegels und des Zeitfehlers verwendet werden.

19. Verfahren nach einem der vorhergehenden Ansprüche, wobei die Synchronisierungspakete über ein IP-Sicherheitsprotokoll (IPSEC) gesendet werden.

20. Verfahren nach einem der vorhergehenden Ansprüche, wobei das zweite Netzwerkgerät (BTS, IPG) als ein Master-Taktgeber für zumindest ein weiteres Netzwerkgerät agiert, bevorzugt für einen Basisstations-Sendeempfänger (BTS), wobei ein Takt des genannten weiteren Netzwerkgeräts durch Ersetzen durch den Master-Takt aktualisiert wird.

21. Basisstationssystem umfassend ein erstes und ein zweites Netzwerkgerät (BSC, IPG, BTS, IPM), die miteinander über ein IP-Netzwerk verbunden sind, wobei das erste und das zweite Netzwerkgerät (BSC, IPG, BTS, IPM) jeweils mit einem Oszillator mit einer Referenzfrequenz ausgestattet sind,
wobei das erste Netzwerkgerät (BSC, IPG) einen Zeitstempler zur Zuweisung eines Zeitstempels zu einem Synchronisierungspaket zu einer Sendezeit und einen Speicher zur Speicherung des genannten Zeitstempels vor seiner Einfügung in einen Hauptabschnitt eines nachfolgenden Synchronisierungspakets umfasst,
wobei das zweite Netzwerkgerät (BTS, IPM) einen Zeitstempler zur Zuweisung eines Zeitstempels zu einem Synchronisierungspaket zu einer Empfangszeit und weiters einen Speicher zur Speicherung der genannten Sende- und Empfangszeitstempel für eine Vielzahl von Synchronisierungspaketen innerhalb eines Beobachtungsintervalls (PoO) umfasst,
**dadurch gekennzeichnet, dass**
das zweite Netzwerkgerät (BTS, IPM) weiters einen Prozessor umfasst, der dafür ausgebildet ist:
eine Netzwerklieferung am Ende eines Beobachtungsintervalls (PoO) auf Basis von Zeitdifferenzen zwischen dem Empfangszeitstempel und dem zugehörigen Sendezeitstempel auszuwerten,
einen Zeitfehler und einen Vertrauenspegel der empfangenen Synchronisierungspakete zu schätzen, wenn die Netzwerklieferung als akzeptabel erachtet wird, und
eine Korrektur auf die Referenzfrequenz des Oszillators des zweiten Netzwerkgeräts (BTS, IPM) auf Basis des Zeitfehlers anzuwenden, wenn der Vertrauenspegel über einem Schwellwert liegt.

22. Basisstationssystem nach Anspruch 21, wobei das erste Netzwerkgerät (BSC, IPG) eine Basisstations-Steuereinrichtung (BSC) und das zweite Netzwerkgerät (BTS, IPM) ein Basisstations-Sendeempfänger (BTS) ist, wobei die Basisstations-Steuereinrichtung (BSC) und der Basisstations-Sendeempfänger (BTS) jeweils mit einem Schnittstellenmodul (IPG, IPM) mit dem genannten Zeitstempler ausgestattet sind.

23. Basisstations-Sendeempfänger (BTS), der über ein IP-Netzwerk an eine Basisstations-Steuereinrichtung (BSC) angeschlossen ist und/oder dafür ausgebildet ist, an eine solche angeschlossen zu werden, umfassend:
einen Oszillator, der mit einer Referenzfrequenz ausgestattet ist;
einen Sendeempfänger zum Senden und Empfangen von Paketen von und zu der Basisstations-Steuereinrichtung (BSC) über das IP-Netzwerk;
einen Zeitstempler zum Zuweisen eines Empfangszeitstempels zu einem Synchronisierungspaket, das von der Basisstations-Steuereinrichtung (BSC) über das IP-Netzwerk empfangen wird;
einen Speicher zur Speicherung der genannten Empfangszeitstempel und von Sendezeitstempeln, die von der Basisstations-Steuereinrichtung (BSC) in Hauptabschnitten von Synchronisationspaketen innerhalb eines Beobachtungsintervalls (PoO) empfangen werden; **gekennzeichnet durch**
einen Prozessor, der dazu ausgebildet ist, eine Netzwerklieferung am Ende eines Beobachtungsintervalls (PoO) auf Basis von Zeitdifferenzen zwischen dem Empfangszeitstempel und dem zugehörigen Sendezeitstempel auszuwerten; einen Zeitfehler und einen Vertrauenspegel der empfangenen Synchronisierungspakete zu schätzen, wenn die Netzwerklieferung als akzeptabel eingestuft wird; und eine Korrektur auf eine Referenzfrequenz des Oszillators auf Basis des Zeitfehlers anzuwenden, wenn der Vertrauenspegel über einem Schwellwert liegt.

24. Basisstations-Sendeempfänger nach Anspruch 23, weiters umfassend einen thermischen Sensor, der sich in der Nähe des Oszillators befindet, um Temperaturänderungen am Oszillator zu erfassen, wobei erfasste Daten des thermischen Sensors vom Prozessor benutzt werden, um den Vertrauenspegel auszuwerten.

25. Basisstations-Sendeempfänger nach Anspruch 23, wobei der genannte Zeitstempler weiters dazu angeordnet ist, einen Sendezeitstempel einem Rückwärts-Synchronisationspaket zuzuweisen, das an die Basisstations-Steuereinrichtung (BSC) versendet werden soll, wobei Rückwärts-Synchronisationspaketen zugeordnete Zeitstempelwerte im Speicher gespeichert und zur Auswertung der Netzwerklieferung, des Zeitfehlers und/oder des Vertrauenspegels verwendet werden.

## Revendications

1. Procédé pour la synchronisation d'une fréquence de référence d'un oscillateur d'un deuxième dispositif réseau (BTS, IPM) avec la fréquence de référence d'un oscillateur d'un premier dispositif réseau (BSC, IPG), ledit procédé comprenant les étapes suivantes :
- attribution d'un horodatage de temps de transmission à un paquet de synchronisation à transmettre par le premier dispositif réseau (BSC, IPG) au deuxième dispositif réseau (BTS, IPM),
- transmission du paquet au deuxième dispositif réseau (BTS, IPM) ;
- lors de la réception du paquet par le deuxième dispositif réseau (BTS, IPM), attribution d'un horodatage de temps de réception,
- dans le deuxième dispositif réseau (BTS, IPM), stockage de l'horodatage de temps de réception et d'un horodatage de temps de transmission reçu;
- répétition de ladite transmission de paquets de synchronisation, de ladite application d'horodatages de temps de réception en l'espace d'une période d'observation (PoO), et dudit stockage d'horodatages dans le deuxième dispositif réseau (BTS, IPM) ; **caractérisé par** les étapes suivantes :
- évaluation, à la fin de la période d'observation (PoO), d'une livraison réseau sur la base des différences temporelles entre l'horodatage de réception et l'horodatage de transmission correspondant,
- estimation d'une erreur de temps et d'un niveau de confiance des paquets de synchronisation reçus, lorsque la livraison réseau est jugé acceptable,
- application d'une correction à une fréquence de l'oscillateur du deuxième dispositif réseau (BTS, IPM), sur la base de l'erreur de temps, lorsque le niveau de confiance est supérieur à un seuil.

2. Procédé selon la revendication 1, dans lequel le premier dispositif réseau (BSC, IPG) est un contrôleur de station de base (BSC) et le deuxième dispositif réseau (BTS, IPM) est un émetteur-récepteur de station de base (BTS).

3. Procédé selon la revendication 2, dans lequel le contrôleur de station de base (BSC) et l'émetteur-récepteur de station de base (BTS) sont pourvus d'un premier et d'un deuxième module d'interface (IPG, IPM) respectivement destinés à permettre la transmission et la réception par le réseau IP, chacun desdits modules d'interface étant pourvu d'un compteur de temps, une valeur actuelle du compteur de temps étant utilisée pour attribuer les horodatages.

4. Procédé selon la revendication 1, 2 ou 3, dans lequel les oscillateurs des premier et deuxième dispositifs réseau (BSC, IPG, BTS, IPM) ont le même fréquence nominale.

5. Procédé selon la revendication 3, dans lequel la fréquence nominale est suffisamment élevée pour limiter un bruit de mesure créé par un effet d'arrondissement d'une période d'horodatage.

6. Procédé selon l'une quelconque des revendications précédentes, dans lequel les paquets de synchronisation sont transmis périodiquement.

7. Procédé selon l'une quelconque des revendications précédentes, dans lequel l'horodatage de transmission est stocké dans le premier dispositif réseau (BSC, IPG) pour l'intégration dans un corps d'un paquet de synchronisation suivant, et puis transmis avec le paquet de synchronisation suivant.

8. Procédé selon l'une quelconque des revendications précédentes, dans lequel un numéro de séquence est présent dans le corps d'un paquet de synchronisation, lequel est également stocké dans le deuxième dispositif réseau (BTS, IPM) et utilisé dans l'estimation du temps de livraison et/ou du niveau de confiance.

9. Procédé selon la revendication 1 ou 8, dans lequel l'évaluation de la livraison réseau comprend les étapes suivantes :
- évaluation d'un temps de livraison comme étant la différence temporelle entre l'horodatage de réception et un horodatage de transmission correspondant ;
- qualification d'un paquet de synchronisation comme invalide, si le temps de livraison est supérieur à un seuil ou ne peut pas être déterminé en raison d'un horodatage manquant,
- détermination combien des paquets de synchronisation sont invalides.

10. Procédé selon la revendication 9, dans lequel une transmission d'un paquet de synchronisation est jugée valide s'il est reçu en conformité avec son numéro de séquence.

11. Procédé selon la revendication 1, dans lequel la spécification du niveau de confiance comprend les étapes suivantes :
- détection des variations thermiques à proximité de l'oscillateur dans le deuxième dispositif réseau (BTS, IPM) avec un capteur thermique ;
- détermination d'une deviation de fréquence sur la base desdites variations thermiques ;
- comparaison entre les horodatages d'au moins certains des paquets de synchronisation et ladite deviation de fréquence ;
- si les horodatages ne correspondent pas à la deviation de fréquence, baisse du niveau de confiance.

12. Procédé selon la revendication 1, dans lequel l'erreur de temps est fournie en estimant un décalage de base de temps entre le premier dispositif réseau (BSC, IPG) et le deuxième dispositif réseau (BTS, IPM), et une distorsion de fréquence d'horloge locale.

13. Procédé selon la revendication 11 ou 12, dans lequel l'évaluation des horodatages est effectuée seulement pour un nombre sélectionné de paquets de synchronisation, une sélection de paquets de synchronisation étant réalisée en choisissant un paquet de synchronisation parmi un groupe de paquets de synchronisation successifs.

14. Procédé selon la revendication 13, dans lequel le paquet de synchronisation choisi est le plus rapide du groupe.

15. Procédé selon l'une quelconque des revendications précédentes, comprenant en outre une séquence de compensation de vieillissement, comprenant :
- le calcul d'une fréquence moyenne sur le long terme, en entrant chaque correction de fréquence valide dans un filtre passe-bas, et
- l'actualisation périodique d'une valeur de vieillissement dans une mémoire non-volatile,
- si la valeur de vieillissement se rapproche d'une valeur extrême d'une plage prédéfinie, un message d'alerte est envoyé.

16. Procédé selon l'une quelconque des revendications précédentes, dans lequel les paquets de synchronisation présentent une taille constante.

17. Procédé selon la revendication 3, dans lequel l'attribution d'horodatages est effectuée par des horodatages matériels présents dans une interface MAC dans les premier et deuxième modules d'interface (IPG, IPM).

18. Procédé selon l'une quelconque des revendications précédentes, dans lequel une opération d'horodatage supplémentaire est appliquée par transmission de paquets de synchronisation du deuxième dispositif réseau (BTS, IPG) vers le premier dispositif réseau (BSC, IPM), les résultats de l'opération d'horodatage supplémentaire étant utilisés dans l'estimation du niveau de confiance et de l'erreur de temps.

19. Procédé selon l'une quelconque des revendications précédentes, dans lequel les paquets de synchronisation sont transmis par un protocole de sécurité IP (IPSEC).

20. Procédé selon l'une quelconque des revendications précédentes, dans lequel le deuxième dispositif réseau (BTS, IPG) agit comme une horloge maîtresse pour au moins un autre dispositif réseau, de préférence un émetteur-récepteur de station de base (BTS), une horloge dudit autre dispositif réseau étant mise à jour par remplacement par l'horloge maîtresse.

21. Système de station de base comprenant un premier et un deuxième dispositif réseau (BSC, IPG, BTS, IPM) mutuellement accouplés par un réseau IP, lesdits premier et deuxième dispositifs réseau (BSC, IPG, BTS, IPM) étant pourvus chacun d'un oscillateur présentant une fréquence de référence,
dans lequel le premier dispositif réseau (BSC, IPG) comprend un horodateur pour l'attribution d'un horodatage à un paquet de synchronisation selon un temps de transmission, et une mémoire pour le stockage dudit horodatage avant l'intégration dans un corps d'un paquet de synchronisation suivant,
dans lequel le deuxième dispositif réseau (BTS, IPM) comprend un horodateur pour l'attribution d'un horodatage à un paquet de synchronisation selon un temps de réception, et comprend en outre une mémoire pour le stockage desdits horodatages du temps de transmission et du temps de réception pour une pluralité de paquets de synchronisation en l'espace d'une période d'observation (PoO),
**caractérisé en ce que** le deuxième dispositif réseau (BTS, IPM) comprend en outre un processeur adapté pour : évaluer une livraison réseau à la fin d'une période d'observation (PoO), sur la base des différences temporelles entre l'horodatage de réception et l'horodatage de transmission correspondant,
estimer une erreur de temps et un niveau de confiance des paquets de synchronisation reçus, lorsque la livraison réseau est jugée acceptable, et
appliquer d'une correction à la fréquence de référence de l'oscillateur du deuxième dispositif réseau (BTS, IPM) sur la base de l'erreur de temps, lorsque le niveau de confiance est supérieur à un seuil.

22. Système de station de base selon la revendication 21, dans lequel le premier dispositif réseau (BSC, IPG) est un contrôleur de station de base (BSC) et le deuxième dispositif réseau (BTS, IPM) est un émetteur-récepteur de station de base (BTS), chacun parmi le contrôleur de station de base (BSC) et l'émetteur-récepteur de station de base (BTS) étant pourvu d'un module d'interface (IPG, IPM) comprenant ledit horodateur.

23. Émetteur-récepteur de station de base (BTS) accouplé à et/ou conçu pour être accouplé à un contrôleur de station de base (BSC) via un réseau IP, et comprenant :
- un oscillateur pourvu d'une fréquence de référence,
- un émetteur-récepteur pour la transmission et la réception de paquets en provenance du contrôleur de station de base (BSC) et vers celui-ci, via le réseau IP ;
- un horodateur pour l'attribution d'un horodatage de temps de réception à un paquet de synchronisation reçu depuis le contrôleur de station de base (BSC) via le réseau IP ;
- une mémoire pour le stockage desdits horodatages de réception et horodatages de transmission reçus depuis le contrôleur de station de base (BSC) dans des corps d'une pluralité de paquets de synchronisation reçus en l'espace d'une période d'observation (PoO) ; **caractérisé par**
- un processeur adapté pour évaluer une livraison réseau à la fin d'une période d'observation (PoO) sur la base de différences temporelles entre l'horodatage de réception et l'horodatage de transmission correspondant ; pour estimer une erreur de temps et un niveau de confiance des paquets de synchronisation reçus lorsque la livraison réseau est jugée acceptable ; et pour appliquer une correction à la fréquence de référence de l'oscillateur sur la base de l'erreur de temps lorsque le niveau de confiance est supérieur à un seuil.

24. Émetteur-récepteur de station de base selon la revendication 23, comprenant en outre un capteur thermique disposé à proximité de l'oscillateur pour capter des variations de température au niveau de l'oscillateur, des données du capteur thermique étant utilisées par le processeur pour l'évaluation du niveau de confiance.

25. Émetteur-récepteur de station de base selon la revendication 23, dans lequel ledit horodateur est en outre conçu pour attribuer un horodatage de temps de transmission à un paquet de synchronisation inversé destiné à être envoyé au contrôleur de station de base (BSC), les valeurs d'horodatage relatives aux paquets de synchronisation inversés étant stockées dans la mémoire et utilisées pour l'évaluation de la livraison réseau, de l'erreur de temps et/ou du niveau de confiance.
